(19) Europäisches Patentamt
European Patent Office
Office européen des brevets

(11) **EP 1 731 884 B1**

(12) **EUROPÄISCHE PATENTSCHRIFT**

(45) Veröffentlichungstag und Bekanntmachung des Hinweises auf die Patenterteilung:
**05.08.2009 Patentblatt 2009/32**

(51) Int Cl.:
***G01F 25/00*** (2006.01)  ***G01F 1/66*** (2006.01)

(21) Anmeldenummer: **05012518.6**

(22) Anmeldetag: **10.06.2005**

(54) **Schichtdickenmessverfahren für einen Ultraschalldurchflussmesskanal**

Layer thickness measuring method for an ultrasonic flow measuring channel

Procédé de mesure de l'epaisseur d'une couche d'un canal de mesure de débit par ultrasons

(84) Benannte Vertragsstaaten:
**AT BE BG CH CY CZ DE DK EE ES FI FR GB GR HU IE IS IT LI LT LU MC NL PL PT RO SE SI SK TR**

(43) Veröffentlichungstag der Anmeldung:
**13.12.2006 Patentblatt 2006/50**

(73) Patentinhaber: **Landis+Gyr GmbH**
**90459 Nürnberg (DE)**

(72) Erfinder:
• **Rother, Stephan Dr. rer. nat.**
**90451 Nürnberg (DE)**
• **Reissinger, Achim**
**91522 Ansbach (DE)**

• **Gärtner, Franz-Georg**
**90461 Nürnberg (DE)**
• **Grünleitner, Johann**
**90482 Nürnberg (DE)**

(74) Vertreter: **Bauerschmidt, Peter et al**
**Rau, Schneck & Hübner**
**Patentanwälte**
**Königstrasse 2**
**90402 Nürnberg (DE)**

(56) Entgegenhaltungen:
**EP-A- 0 437 872         EP-A- 0 773 431**
**DE-A1- 4 027 030      US-B1- 6 381 549**

EP 1 731 884 B1

**Beschreibung**

Die Erfindung bezieht sich auf ein Messverfahren für einen Ultraschallmesskanal zur Bestimmung einer Dicke einer geometrischen Veränderung auf innerhalb eines Ultraschallmessweges angeordneten, Ultraschall reflektierenden Flächen. Des Weiteren bezieht sich die Erfindung auf eine Messanordnung zur Durchführung des Messverfahrens.

Stand der Technik

Allen bekannten Messverfahren für Ultraschallmesskanäle liegt die gemeinsame Aufgabe zugrunde, dass möglichst verlustfrei hochfrequente akustische Signale, vorzugsweise Ultraschallsignale, in ein zu untersuchendes Medium eingekoppelt werden, um zumeist nach dem Prinzip der Laufzeitdifferenzmessung (Mitnahmeeffekt) die Laufzeit von innerhalb des Mediums reflektierten Ultraschallwellen zu erfassen. Aus der Laufzeitdifferenz der mit dem bzw. gegen das Medium ausgesandten Ultraschallsignale kann dann die Fliessgeschwindigkeit des Mediums selbst ermittelt werden.

Im Messkanal einer Ultraschallmessanordnung wird das durchfliessende Medium unter Berücksichtigung seines Strömungsverhaltens integrierend erfasst, d. h. die über den gesamten Querschnitt des Messkanals variable Strömungsgeschwindigkeit des Volumenstroms wird durch einen geeigneten Messaufbau summarisch erfasst und gemittelt (Integralmittelwert).

Diese "integrierende Erfassung des gesamten Volumenstroms" wird gegenwärtig über die möglichst vollständige Erfassung des vom Ultraschallsender abgegebenen Schallfeldes unter Ausnutzung der Reflexionseigenschaften an Grenzschichten oder über die Erzeugung nahezu ebener Wellen und Absorption aller störenden Wellenzüge erreicht.

Die Messung mittels Ultraschall geniesst wegen ihrer Genauigkeit und der geringen Messdauer eine besondere Stellung im Bereich der Durchflussmessverfahren, zu denen beispielsweise auch die Durchflussmessung nach dem Flügelradprinzip gehört. Ein bekanntes Phänomen bei der Ultraschalldurchflussmessung ist, dass von einem ersten Ultraschallwandler "keulenförmlg" ausgesandte Ultraschallimpulse bei einem zweiten, empfangenden Ultraschallwandler als eine Überlagerung aus einem Direktstrahl und mindestens einem Reflektionsstrahl erfasst wird. Der Direktstrahl ist derjenige Anteil des empfangenden Ultraschallwellensignals, der unmittelbar durch das beaufschlagte Strömungsmedium beim zweiten Ultraschallwandler eintrifft. Derjenige Anteil des empfangenen Ultraschallwellensignals, der an der Wandung des durchströmten Messkanals reflektiert wird, legt einen gegenüber dem Direktstrahl vergrösserten Laufweg zurück und trifft demzufolge mit zeitlichem Versatz bzw. phasenverschoben bei dem zweiten Ultraschallwandler ein.

Mit der Kenntnis, dass das empfangene Signal am zweiten Ultraschallwandler eine derartig Überlagerung darstellt, die von der Kanalgeometrie und damit einer Geometrieänderung abhängig ist, gehört diese exakte Laufzeitmessung bereits seit geraumer Zeit zum Stand der Technik.

Da üblicherweise Ultraschallmessanordnungen unter Berücksichtigung zweier turnusmässiger Funktionsüberprüfungen bis zu 15 Jahre im Einsatz verbleiben, muss aber die Messgenauigkeit langzeitstabil gewährleistet werden.

Hingegen hat sich gezeigt, dass nicht nur Flügelraddurchflussmesser sondern auch Ultraschalldurchflussmesser auf Geometrieänderungen durch das sie umströmende bzw. durchströmende Medium empfindlich reagieren können.

Diese geometrischen Änderungsphänomene können ohne weiteres während der Einsatzdauer eines Durchflussmessers einen signifikanten Einfluss gewinnen. Dieser Einfluss der Geometrieänderung ist dann insbesondere spürbar für diejenigen Anteile eines empfangenen Ultraschallwellensignals, die mit den geometrisch veränderten Wandungen in Kontakt treten, nämlich der Reflektionsstrahl -wie bereits oben angesprochen. Die Laufzeit dieses Reflektionsstrahls verändert sich dann aufgrund der geometrischen Laufwegänderung.

In der EP 0 773 431 A2 wird ein Ultraschall-Durchflussmesser für flüssige oder gasförmige Medien beschrieben. Diese Messanordnung umfasst auch einen zusätzlichen Ultraschallwandler für eine Wanddickenmessung an einem von dem Messmedium durchflossenen Messrohr. Die so ermittelte Wanddicke des Messrohrs kann in die Durchflussberechnung einbezogen werden.

In der US 6,381,549 B1 wird ein weiterer Ultraschall-Durchflussmesser beschrieben. Die elektronische Auswerteeinheit dieser Messanordnung ist so ausgelegt, dass mittels einer Untereinheit der aktuelle Innendurchmesser des Messkanals bestimmt werden kann.

Darstellung der Erfindung

Der Erfindung liegt die Aufgabe zugrunde, ein Messverfahren und eine Messanordnung für einen Ultraschallmesskanal der vorstehend genannten Gattung derart weiterzubilden, dass selbst bei einer Geometrieänderung eines Ultraschallmesskanals im strömenden Medium eine genaue Messung ermöglicht wird.

Die Lösung der der Erfindung zugrunde liegenden Aufgabe ist für das Messverfahren im Anspruch 1 und für die Messanordnung im Anspruch 3 angegeben. Den Erfindungsgedanken vorteilhaft weiterbildende Merkmale für das Messverfahren ist Gegenstand des Unteranspruchs 2.

Der Kern der vorliegenden Erfindung ist darin zu sehen, dass mittels eines Ultraschallsignals, welches auf eine Eichreflexwandung und auf eine zu untersuchende Oberfläche trifft, eine Dicke einer geometrischen Veränderung bestimmbar ist, und zwar durch einfache Messung der Laufzeiten des Ultraschallsignals zu der Eichreflexwandung und zu der zu untersuchenden Oberfläche unter Berücksichtigung geometrischer Proportionalitätsfaktoren. Ist diese Dicke der geometrischen Veränderung einmal bestimmt, kann sie mit Vorteil gegenüber herkömmlichen Messverfahren bei einer Durchflussmessung nach dem Mitnahmeprinzip durch Ultraschall entsprechend berücksichtigt werden, so dass der Einfluss der Geometrieänderung eliminiert werden kann. Unter geometrischer Veränderung im Sinne der Erfindung wird jede Veränderung an Wandungen eines Ultraschallmesskanals verstanden, wie zum Beispiel eine Verschmutzung oder eine Abtragung.

Kurze Beschreibung der Figuren

Die Erfindung wird nachstehend ohne Beschränkung des allgemeinen Erfindungsgedankens anhand von Ausführungsbeispielen unter Bezugnahme auf die Zeichnungen exemplarisch beschrieben. Es zeigen die

Fig. 1: eine Schnittdarstellung einer Ultraschallmessanordnung mit einer erfindungsgemässen Eichreflexwandung und einer zu untersuchenden Oberfläche;

Fig. 2: eine Ausführungsvariante der Erfindung, und

Fig. 3: eine weitere Ausführungsvariante der Erfindung mit einem Ultraschallmessrohr zur Durchflussmessung.

Wege zur Ausführung der Erfindung, gewerbliche Verwendbarkeit

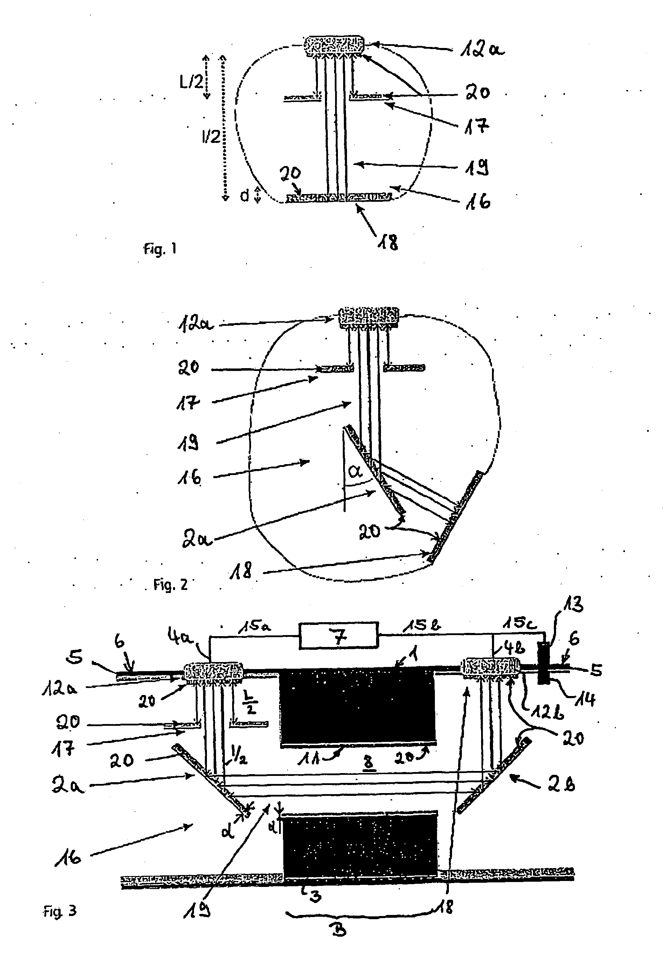

Fig. 1 zeigt einen Ultraschallkopf 12a, zu dem in einem Abstand L/2 eine Eichreflexwandung 17 und in einem Abstand 1/2 eine zu untersuchende Oberfläche 18 angeordnet ist. Sowohl die Eichreflexwandung 17 als auch die zu untersuchende Oberfläche 18 weisen eine geometrische Veränderungsschicht 20 mit einer Dicke d auf. Ein von dem Ultraschallkopf 12a ausgesandtes Ultraschallsignal 19 wird von der Eichreflexwandung 17 und der Oberfläche 18 reflektiert und zurückgesendet zum Ultraschallwandler 12a.

Im unveränderten Zustand der gesamten Messanordnung werden die Längen L/2 und 1/2 zwischen Ultraschallkopf 12a und der Elchreflexwandung 17 bzw. der zu untersuchender Oberfläche 18 hochgenau (z.B. mittels Schallmessung bei exakt bekannter Schallgeschwindigkeit) ermittelt und gespeichert.

Bildet sich auf der zu untersuchenden Oberfläche 18 eine geometrische Veränderungsschicht der Dicke d, verändern sich die Abstände L/2 und 1/2 je nach Geometrie des Systems um $\Delta L$ bzw. $\Delta l$. Die Längenänderungen sind proportional zur Schichtdicke d, wobei entsprechende Proportionalitätsfaktoren mit k und m bezeichnet werden; somit ergibt sich für $\Delta L$ bzw. $\Delta l$:

$$\Delta L = k \cdot d \qquad \text{bzw.} \qquad \Delta l = m \cdot d.$$

Die Werte für k und m müssen für die jeweilige Messanordnung ermittelt (Geometrie, geometrischer Änderungsgrad der verschiedenen Reflexionsstellen empirisch) und gespeichert werden.

Beispiele für k und m:

- direkte Bestrahlung wie in Fig. 1 gezeigt, identische geometrische Änderung von Ultraschallkopf 12a, Eichreflexwandung 17 und zu untersuchender Oberfläche 18:

$$k = m = 4$$

- direkte Bestrahlung, identische geometrische Änderung von Ultraschallkopf 12a und Oberfläche 18:

    Eichreflexwandung 17 verändert sich nur halb so stark (aufgrund unterschiedlichen Materials):

$$m = 4, \ k = 3$$

- direkte Bestrahlung der Eichreflexwandung, Oberfläche wird über einen Umlenkspiegel (Winkel a) bestrahlt, wie eine erste Ausführungsvariante in Fig. 2 zeigt:

    identische geometrische Änderung von Ultraschallkopf 12a, Eichreflexwandung 17 und Oberfläche 18:

$$m = 4 + 4/\sin\alpha, \ k = 4$$

Im Zustand mit einer geometrischen Änderung werden nun die Laufzeiten T und t ermittelt, die das Schallsignal benötigt, um die Strecken L mit L=2 L/2 (Ultraschallkopf 12a - Eichreflexwandung 17 - Ultraschallkopf 12a) und I mit 1=2 1/2 (Ultraschallkopf 12a - Oberfläche 18 - Ultraschallkopf 12a) zu durchlaufen. Mit der Schallgeschwindigkeit c und den gespeicherten Werten L/2 bzw. L, 1/2 bzw. 1, m und k lässt sich die Schichtdicke d berechnen:

$$T = \frac{L - \Delta L}{c}$$

$$t = \frac{l - \Delta l}{c}$$

$$\Rightarrow \frac{T}{t} = \frac{L - \Delta L}{l - \Delta l} = \frac{L - k \cdot d}{l - m \cdot d}$$

$$\Rightarrow d = \frac{\dfrac{T}{t} \cdot l - L}{\dfrac{T}{t} \cdot m - k}$$

Fig. 3 zeigt eine weitere Ausführungsvariante der Erfindung anhand einer Anwendung bei einer Ultraschalldurchflussmessung. Fig. 3 zeigt einen Ultraschall-Durchflussmesser 1, der z. B. als Wasser- oder Wärmemengenzähler in Haushalten Verwendung findet. Prinzipiell sind auch industrielle Verwendungen, z. B. zur Durchflussmessung von sonstigen flüssigen oder gasförmigen Medien, insbesondere chemischen Flüssigkeiten oder Gasen, möglich. Der Ultraschall-Durchflussmesser 1 wird nachfolgend mit Durchflussmesser 1 bezeichnet. Der Durchflussmesser 1 umfasst zunächst ein Messrohr 3, das in eine nicht näher gezeigte Leitung einer Versorgungsanlage, z.B. einer Hauswasserversorgung, zwischengeschaltet wird. Er weist dazu endseitige Anschlussflansche 5 auf, die außenseitig mit Gewinden 6 versehen sind. Das Messrohr 3 weist innenseitig über den Bereich B eine Verengung seines Innenquerschnitts auf. Dieser von dem Medium zu durchströmende Bereich ist als Messkanal 8 bezeichnet. An den Enden des Messkanals 8 sind in der nicht näher bezeichneten Außenwand des Messrohres 3 zueinander beabstandete Flansche angeordnet, In denen jeweils ein zugehöriger Ultraschallkopf 12a und 12b angeordnet ist. Die Ultraschallköpfe 12a und 12b können allgemein nach dem Stand der Technik ausgestaltet sein. Bevorzugt sind die Ultraschallköpfe 12a und 12b als so genannte Topfwandler mit einem Metallgehäuse, Insbesondere aus Messingwerkstoff, ausgeführt. Derartige Ultraschallköpfe (auch Schallsensoren genannt) sind beispielsweise aus der EP 0 679 874 und der EP 0 858 844 A2 bekannt.

Die Flansche mit den dazugehörigen Ultraschallköpfen 12a bzw. 12b sind derart am Messrohr 1 befestigt, dass die Ultraschallköpfe 12a und 12b senkrecht zur Fliessrichtung des Mediums in das Innere des Messrohres 1 hineinschallen. Selbstverständlich sind die Ultraschallköpfe 12a und 12b über ihre jeweiligen Anschlussfahnen 4a und 4b und Leitungen 15a, 15b mit einer Verarbeitungseinrichtung 7 verbunden. Die Verarbeitungseinrichtung 7 dient dabei wie allgemein aus dem Stand der Technik bekannt zum Ansteuern der Ultraschallköpfe 12a, 12b und zum Auswerten ihrer Empfangssignate.

Beim Einsatz des Durchflussmessers 1 als Wärmemengenzähler kann zusätzlich auch ein Temperatursensor 13 vorgesehen sein, der ebenfalls mit der Verarbeitungseinrichtung 7 über eine Leitung 15c verbunden ist und mit seinem Fühlerende 14 in das Messrohr 3 und somit in den Mediumsstrom hineinragt.

Zur Messung der Durchflussmenge wird das Ultraschallsignal von einem der Ultraschallköpfe 12a, 12b zum anderen und umgekehrt gesendet. Aus dem Laufzeitunterschied der Signale - mit und gegen den Mediumsstrom - wird in der Verarbeitungseinrichtung 7 die FließBgeschwindigkeit ermittelt. Unter Berücksichtigung des Querschnitts der Messstrecke 8 kann dann rechnerisch die Durchflussmenge ermittelt werden. Um das Ultraschallsignal von den Ultraschallköpfen 12a, 12b längs durch die Messstrecke 8 zu führen, wird es über Umlenkspiegel 2a und 2b umgelenkt.

Wie bereits oben zu den Figuren 1 und 2 beschrieben, werden im unveränderten Zustand der gesamten Messanordnung die Längen L/2 und l/2 zwischen Ultraschallkopf 12a und der Eichreflexwandung 17 bzw. zwischen dem ersten Ultraschallwandler 12a, dem ersten und zweiten Umlenkspiegel 2a, 2b und dem zweiten Ultraschallwandler 12b hochgenau ermittelt und in der Verarbeitungseinrichtung 7 gespeichert. Im Falle einer geometrischen Veränderung (20) der Eichreflexwandung 17, der Umlenkspiegel 2a, 2b und einer Oberfläche 11 des Messrohrs 8 lässt sich die Dicke d der geometrischen Änderungsschicht nach obiger Gleichung bestimmen, wobei bei identischer Änderung aller Reflexionsstellen für die Proportionalitätsfaktoren k und m gilt:

$$m = 4 + 8/\sin\alpha, \quad k = 4$$

Die Ergebnisse aus der Dickenberechnung der geometrischen Änderungsschicht 20 finden somit unmittelbare Anwendung in dem oben beschriebenen Durchflussmessverfahren, sodass die exakte Durchflüssmessung völlig unbeeinflusst bleibt von jeder Art und der Quantität einer Geometrieänderung innerhalb des gesamten Messweges.

| 1 | Durchflussmesser |
|---|---|
| 2a, 2b | Umlenkspiegel |
| 3 | Messrohr |
| 4a, 4b | Anschlussfahne |
| 5 | Anschlussflansch |
| 6 | Gewinde |
| 7 | Verarbeitungseinrichtung |
| 8 | Messkanal |
| 11 | Oberfläche des Messkanals 8 |
| 12a, 12b | Ultraschallkopf |
| 13 | Temperatursensor |
| 14 | Fühlerende |
| 15a, 15b, 15c | Leitung |
| 16 | Medium |
| 17 | Eichreflexwandung |
| 18 | zu untersuchende Oberfläche |
| 19 | Schallsignal |
| 20 | geometrische Änderungsschicht; Geometrieänderung |

**Patentansprüche**

1. Messverfahren für einen Ultraschall-Durchflussmesser (1) zur Bestimmung einer Dicke (d) einer geometrischen Änderungsschicht (20) auf innerhalb eines Ultraschallmessweges (L/2, 1/2) angeordneten, Ultraschall reflektierenden Flächen (2a,2b, 11, 12a, 12b, 17, 18),
**dadurch gekennzeichnet,**

   - **dass** ein erstes Ultraschallsignal von einem Ultraschallwandler (12a) zu einer Eichreflexwandung (17) ausgesendet und von dieser Elchreflexwandung (17) zu dem Ultraschallwandler (12a) reflektiert wird, wobei diese Eichreflexwandung (17) in einem ersten Abstand (L/2) zu dem Ultraschallwandler (12a) angeordnet ist und wobei eine erste Laufzeit (T) des Ultraschallsignals von und zu dem Ultraschallwandler (12a) gemessen wird;
   - **dass** ein zweites Ultraschallsignal von dem Ultraschallwandler (12a) zu einer zu untersuchenden Oberfläche (2a, 2b, 11, 12a, 12b, 18) ausgesendet und von dieser Oberfläche (2a, 2b, 11, 12a, 12b, 18) zu dem Ultraschallwandler (12a) reflektiert wird, wobei diese Oberfläche (2a, 2b, 11, 12a, 12b, 18) in einem zweiten Abstand (1/2) zu dem Ultraschallwandler (12a) angeordnet ist und wobei eine zweite Laufzeit (t) des Ultraschallsignals von und zu dem Ultraschallwandler (12a) gemessen wird, und
   - **dass** sich die Schichtdicke (d) der geometrischen Änderung auf den Flächen (2a, 2b, 11, 12a, 12b, 18) ergibt zu

$$d = \frac{\frac{T}{t} \cdot l - L}{\frac{T}{t} \cdot m - k} \; ;$$

   mit k als einem empirischen Geometriefaktor zur Eichreflexwandung (17) gehörig und mit m als einem empirischen Geometriefaktor zur zu untersuchenden Oberfläche (2a, 2b, 11, 12a, 12b, 18) gehörig.

2. Messverfahren nach Anspruch 1,
**dadurch gekennzeichnet,**
**dass** das erste und das zweite Ultraschallsignal gleichzeitig ausgesendet wird.

3. Messanordnung zur Durchführung des Messverfahrens nach einem der vorhergehenden Ansprüche,
**dadurch gekennzeichnet,**
**dass** eine Eichreflexwandung (17) in einem ersten Abstand (L/2) von einem Ultraschallwandler (12a) zum Reflektieren eines von dem Ultraschallwandler (12a) aussendbaren Ultraschallsignals angeordnet ist und dass mindestens eine auf eine geometrische Änderung zu untersuchende Oberfläche (18) in einem zweiten Abstand (I/2) von dem Ultraschallwandler (12a) zum Reflektieren eines von dem Ultraschallwandler (12a) aussendbaren Ultraschallsignals angeordnet ist.

**Claims**

1. Measuring method for an ultrasonic flow meter (1) for determining a thickness (d) of a geometric modification layer (20) on ultrasound-reflecting surfaces (2a, 2b, 11, 12a, 12b, 17, 18) which are arranged within an ultrasonic measuring path (L/2, 1/2),
**characterized in**

   - **that** a first ultrasonic signal is emitted by an ultrasonic transducer (12a) towards a calibrated reflection wall (17) and reflected by said calibrated reflection wall (17) towards the ultrasonic transducer (12a), wherein said calibrated reflection wall (17) is arranged at a first distance (L/2) from the ultrasonic transducer (12a) and wherein a first running time (T) of the ultrasonic signal from and to the ultrasonic transducer (12a) is measured;
   - **that** a second ultrasonic signal is emitted by the ultrasonic transducer (12a) towards a surface (2a, 2b, 11, 12a, 12b, 18) to be examined and is reflected by said surface (2a, 2b, 11, 12a, 12b, 18) towards the ultrasonic transducer (12a), wherein said surface (2a, 2b, 11, 12a, 12b, 18) is arranged at a second distance (1/2) from the ultrasonic transducer (12a), and wherein a second running time (t) of the ultrasonic signal from and to the ultrasonic transducer (12a) is measured; and
   - **that** the layer thickness (d) of the geometric modification on the surfaces (2a, 2b, 11, 12a, 12b, 18) is obtained as follows:

$$d = \frac{\frac{T}{t} \cdot l - L}{\frac{T}{t} \cdot m - k} \; ;$$

   with k being an empiric geometric factor belonging to the calibrated reflection wall (17) and m being an empiric geometric factor belonging to the surface (2a, 2b, 11, 12a, 12b, 18) to be examined.

**2.** Measuring method according to claim 1, **characterized in that** the first and the second ultrasonic signal are emitted simultaneously.

**3.** Measuring arrangement for performing the measuring method according to one of the preceding claims, **characterized in that** a calibrated reflection wall (17) is arranged at a first distance (L/2) from an ultrasonic transducer (12) for reflecting an ultrasonic signal which is emittable by the ultrasonic transducer (12a); and **that** at least one surface (18) to be examined for a geometric modification is arranged at a second distance (1/2) from the ultrasonic transducer (12a) for reflecting an ultrasonic signal which is emittable by the ultrasonic transducer (12a).

**Revendications**

**1.** Procédé de mesure pour un débitmètre à ultrasons (1), pour la détermination d'une épaisseur (d) d'une couche de variation géométrique (20) sur des surfaces (2a, 2b, 11, 12a, 12b, 17, 18) disposées à l'intérieur d'un trajet de mesure par ultrasons (L/2, l/2) et réfléchissant les ultrasons, **caractérisé**

- **en ce qu'**un premier signal ultrasonique est émis par un convertisseur ultrasons (12a) vers une paroi réfléchissante d'étalonnage (17) et réfléchi par la paroi réfléchissante d'étalonnage (17) vers le convertisseur ultrasons (12a), ladite paroi réfléchissante d'étalonnage (17) étant disposée à un premier intervalle (L/2) du convertisseur ultrasons (12a) et un premier temps de parcours (T) du signal ultrasonique depuis le convertisseur ultrasons (12a) et vers celui-ci étant mesuré ;
- en ce qu'un deuxième signal ultrasonique est émis par le convertisseur ultrasons (12a) vers une surface à examiner (2a, 2b, 11, 12a, 12b, 18) et réfléchi par cette surface (2a, 2b, 11, 12a, 12b, 18) vers le convertisseur ultrasons (12a), ladite surface (2a, 2b, 11, 12a, 12b, 18) étant disposée à un deuxième intervalle (l/2) du convertisseur ultrasons (12a) et un deuxième temps de parcours (t) du signal ultrasonique depuis le convertisseur ultrasons (12a) et vers celui-ci étant mesuré, et
- en ce que l'épaisseur de couche (d) de la variation géométrique sur les surfaces (2a, 2b, 11, 12a, 12b, 18) est obtenue par la formule

$$d = \frac{\dfrac{T}{t} \bullet l - L}{\dfrac{T}{t} \bullet m - k} \; ;$$

où k relève de la paroi réfléchissante d'étalonnage (17) en tant que facteur géométrique empirique et m de la surface à examiner (2a, 2b, 11, 12a, 12b, 18) en tant que facteur géométrique empirique.

**2.** Procédé de mesure selon la revendication 1, **caractérisé en ce que** le premier et le deuxième signaux ultrasoniques sont émis simultanément.

**3.** Dispositif de mesure pour l'exécution du procédé de mesure selon l'une des revendications précédentes, **caractérisé en ce qu'**une paroi réfléchissante d'étalonnage (17) est disposée à un premier intervalle (L/2) d'un convertisseur ultrasons (12a) pour la réflexion d'un signal ultrasonique pouvant être émis par le convertisseur ultrasons (12a), et **en ce qu'**au moins une surface à examiner (18) relativement à une variation géométrique est disposée à un deuxième intervalle (1/2) du convertisseur ultrasons (12a) pour la réflexion d'un signal ultrasonique pouvant être émis par le convertisseur ultrasons (12a).

Fig. 1

Fig. 2

Fig. 3

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- EP 0773431 A2
- US 6381549 B1
- EP 0679874 A
- EP 0858844 A2